Europäisches Patentamt

European Patent Office

Office européen des brevets

(11) Publication number: **0 353 200**
**A2**

## EUROPEAN PATENT APPLICATION

(21) Application number: 89830261.7

(22) Date of filing: **13.06.89**

(51) Int. Cl.5: **G 01 S 17/10**
**G 01 S 17/88**

(30) Priority: **27.06.88 IT 6760688**

(43) Date of publication of application:
**31.01.90 Bulletin 90/05**

(84) Designated Contracting States: **DE ES FR GB SE**

(71) Applicant: **FIAT AUTO S.p.A.**
**Corso Giovanni Agnelli 200**
**I-10135 Torino (IT)**

(72) Inventor: **Venturello, Giorgio**
**Via Modigliani, 5**
**I-10137 Torino (IT)**

(74) Representative: **Bosotti, Luciano et al**
**c/o Jacobacci-Casetta & Perani S.p.A. Via Alfieri, 17**
**I-10121 Torino (IT)**

The title of the invention has been amended (Guidelines for Examination in the EPO, A-III, 7.3).

(54) Method and device for instrument-assisted vision in poor visibility, particularly for driving in fog.

(57) The method comprises the steps of:
- illuminating a portion of space situated in the region through which the vehicle is about to travel (1) by means of a plurality of pulses (5, 6) emitted at predetermined time intervals;
- monitoring the scene in front of the vehicle (1), including the light which is reflected back by the obstacle (3) in respective time windows;
- reconstructing the image graphically, and
- displaying the reconstructed and processed image on the windscreen.

FIG. 1

Bundesdruckerei Berlin

**Description**

**A method and device for instrumental vision in conditions of poor visibility, particularly for driving in fog**

The present invention relates in general to the display of scenes in conditions of low visibility.

In particular, the present invention has been developed with a view to its possible use for facilitating the driving of motor vehicles in conditions of poor visibility, for example in fog.

Devices which use equipment with radar systems have already been proposed for identifying objects in fog. Whilst they enable objects to be located in conditions of poor visibility, these devices are not without disadvantages for use in motor vehicles since the instrumental information they supply is not readily understood by the average driver.

In general, the problem with vision in fog, both during the day and at night, results from the low level of illumination of the detector by the object to be detected compared with the level generated by the scattering of the ambient light by the fog itself.

In fact, the scattering by the fog obviously affects all of the illuminated space and the signal detected by the receiver is dependent on the space itself and on the laws by which the light is attenuated/propagated in the receiving geometry in question.

The presence of an object to be detected in order to describe the scene, however, is connected only with reflection/scattering by the surface of the object which faces the receiver.

As a result, the signal/noise ratio is largely dependent on the density of the scattering medium in the space between the observer and the object.

Moreover, regardless of the method used for detecting the image of the scene, there are two basic aproaches to the problem of using the information obtained:

a) the reproduction of a processed scene which still contains the shape and appearance of what the observer would see if the visibility were better (interpretation and decision on the part of the observer);

b) the reproduction of summarised information concerning the contents of the scene without the "photographic" reconstruction thereof (interpretation -and decision - on the part of the automatic system).

Case a) includes television systems for detection in the visible and near-infrared; case b) includes microwave radar systems and passive thermographic systems, whilst far-infrared (10 micron) systems with active illumination belong to an intermediate category.

Essentially, the object of the present invention is to provide means for seeing in conditions of poor visibility, which are suitable for application in the automotive field, particularly with regard to driving in fog, and at the same time ensure reliable monitoring, even in critical conditions, and the ability to reconstitute for the driver visual information which is immediately recongisable as an image of the scene at which he is looking.

According to the invention, this object is achieved by virtue of a method for detecting images of an object in conditions of poor visibility, characterised in that it comprises the steps of:

- sending a train of light pulses towards the object,
- observing the object illuminated by the pulses in respective time windows,
- reconstructing images of the object from the observation in the respect time windows, and
- displaying the image thus reconstructed.

A further object of the present invention is a device for detecting images of an object in conditions of poor visibility, particularly by the method specified above, characterised in that it comprises:

- illumination means for sending a train of light pulses towards the object,
- televisual means for observing the object illuminated by the pulses and for generating corresponding television signals, the televisual means including a shutter which is operable selectively to make the televisual means sensitive only in respective time windows,
- processor means for reconstructing images of the object from the television signals obtained, and
- display means for presenting the reconstructed images.

For a better understanding of the invention, a description of an embodiment of the invention will now be given, purely by way of non-limiting example, with reference to the appended drawings, in which:

- Figure 1 shows schematically a possible situation of use of an instrumental vision device according to the invention, and

- Figure 2 shows the structure of part of the device of Figure 1 in greater detail, in the form of a block diagram.

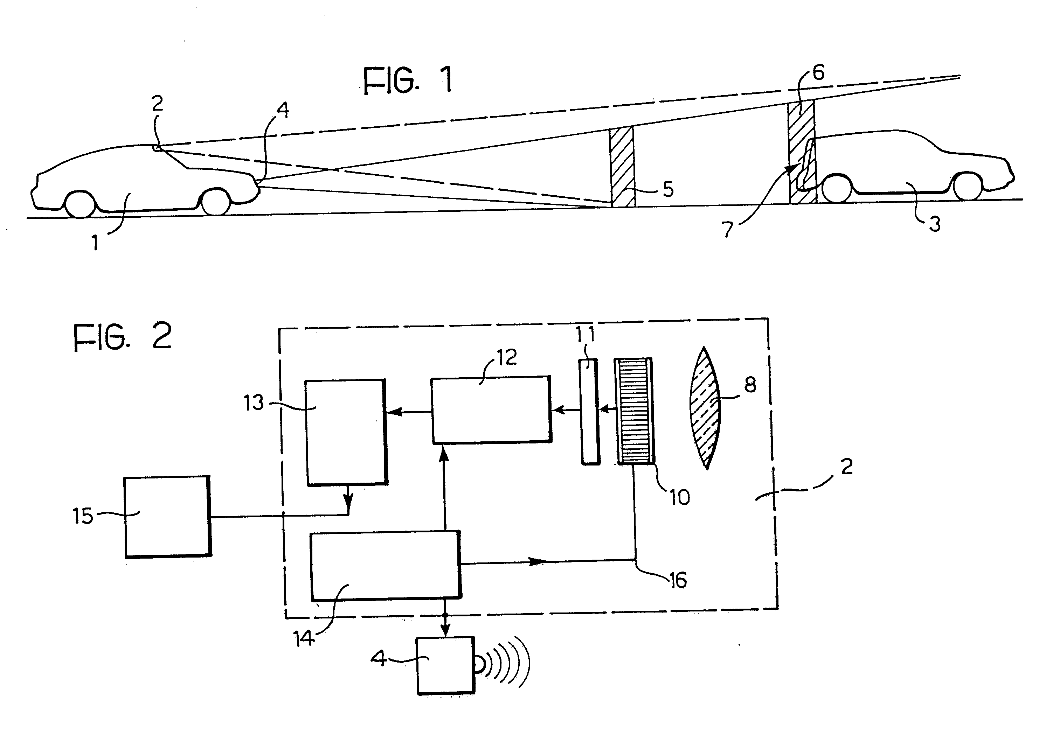

With reference to Figure 1, a car, indicated 1, is provided with a device 2, 4 for detecting, in accordance with the invention, the preence of a moving car 3 which is not visible to the driver of the vehicle because of fog between the two vehicles 1 and 3. A lamp, indicated 4, preferably with monochromatic emission (for example, operating at a wavelength $\lambda$ of the order of 900 nm), is mounted on the front part of the car 1 and can emit light pulses of a duration $\tau$ (e.g. $10^{-8}$ seconds) with a frequency of repetition $f = 1/T$ equal to an average of 3 KHz, where T represents the interval between the pulses.

Each pulse emitted by the lamp 4 is propagated in the space in front of the car 1 and illuminates a respective "window" or "slice" with a depth $C\tau$ (where C is the speed of light in the medium) equal, for example, to approximately3 metres (not to scale in the drawings). This window moves forwards towards the car 3 as shown schematically in Figure 1 where 5 and 6 represent the successive positions reached by the window corresponding to a given light pulse or, alternatively, the positions reached at the same time by two pulses emitted in succession.

In the case of the window 5, which illuminates a space without obstacles, it is clear that no image will be returned to the vehicle 1, except that due to the backscattering caused by the fog.

In the case of the window 6, however, both the fog and the obstacle (the vehicle 3) will contribute to the signal since, in this case, the useful back-scattering region 7, that is, the rear part of the car 3 is included in the space illuminated by the pulse.

The reference numeral 2 indicates a processing system which is also mounted on the front part of the car 1 and is constituted by a lens 8 adapted to focus the reflected image of the obstacle 3 (whose intensity is very low) onto an image intensifier 10. In this way, a completely reconstructed image of the vehicle 3 is provided by the subsequent processing of the intensified signal by a televisual sensor 11 (for example, of the CCD type), by the respective management unit (television camera) 12, and by a processing and control system 13 and 14.

The image reconstructed by the processing and control system 13, 14 (which also controls the operation of the lamp 4) can then be presented on the windscreen by means of a head-up display unit 15, according to criteria widely known in the aeronautical field. The driver can thus see the obstacle 3 with the exact dimensions and at the exact distance at which it is situated, under just the same conditions as those governing vision under conditions of normal visibility.

The image intensifier 10 used in the device according to the invention is adapted for pulsed operation and thus also for performing the task of a shutter (as will be specified below) so as better to discriminate between the backscattering from the obstacle to be displayed and that from the fog.

According to a variant of the invention, the rapid obturation of the television camera 11, 12 carried out by the intensifier device 10 may alternatively be achieved by control of the grid voltage of any vacuum tube (e.g. a vidicon) which replaces the CCD televisual sensor 11, or at any rate other sensors for carrying out these functions.

In order better to understand the criteria governing the pulsed operation of the intensifier shutter 10 (or a member equivalent thereto) which is controlled by the system 14 through a piloting line 16, it should be noted that any object lying in a space illuminated by the pulses from the lamp 4 reflects back/scatters the incident light. The sources of the light "echo" are located in the space and are active continuously or in pulses at the moment when the illuminating wave front 5, 6 strikes them.

If a scattering medium (fog) is present, in addition to the attenuation of all the light signals passing through it, there is also an emission (continuous or pulsed) of backscattered radiation constituting a background which can rapidly mask the other signal sources.

However, if only pulsed illumination is considered, there is, at any moment, a layer (whose shape depends on the illuminating lens) with a thickness $c \tau$ ($c$ = the speed of light, $\tau$ = pulse duration). If a receiving time window of a duration $\tau$ is opened (by means of the actuator 10) with a delay $n \tau$ ($n = 1, 2, 3...$) relative to the illuminating pulse, an image of a "slice" of the space of a thickness $c \tau$ at a distance

$$n \frac{\tau . c}{2}$$

is obtained.

If there is an object in this slice, the ratio between the signal reflected back/scattered by the object and that scattered back by the fog in the space is at a maximum.

This signal is propagated towards the receiver 2 and is attenuated due to the characteristics of the propagation medium, but the original signal/background ratio remains unaltered.

This is because the receiving time selected by the shutter 10 excludes all the signal contributions outside the selected "slice".

Since the positions of various objects in the scene are not known beforehand, it is necessary to carry out a scanning sweep through the entire space up to the greatest distance of interest in order to achieve complete monitoring.

Quantitatively, and as a first approximation, the improvement in the signal/background (S/N) ratio resulting from the use of a pulsed illumination-detection system can be evaluated by considering that:

1) with continuous illumination, this ratio (S/N) is proportional to Ro/Rv where Ro is the signal reflected back/scattered by the object to be displayed (vehicle 3) and Rv is the signal scattered back by the volume of fog concerned between the object 3 and the receiver 2;

2) with pulsed illumination (of repetition N), the (S/N) ratio is proportional to

$$\frac{N \tilde{\tau} . Ro}{N \tilde{\tau} . Rv} . \frac{D}{\tau c}$$

where D is the maximum distance monitored.

The convenience of having illumination pulses (lamp 4) and receiving windows (shutter 10) of equal and short duration (10 ns) is obvious. If a standard television camer (11, 12) is used as the sensor and it is proposed to take a "slice" for every frame (1/25 sec, 1/30 sec) with a maximum S/N ratio, pulses of 10 ns would be required.

A reasonable number $N_q$ of frames for the reconstruction of a scene would be approximately 50, thus covering a maximum monitored distance

$D = N_q \cdot \tau \cdot c = 50 \cdot 10^{-8} \cdot 3 \cdot 10^{-8} = 150$ m is 1.5 s.

Information on the distance would thus be associated with each frame, enabling an immediate three-dimensional reconstruction of the scene.

However, it is clearly necessary to increase the acquisition rate by one order of magnitude to achieve detection rates more appropriate for monitoring the road (0.1 s). This can also be achieved but, combined with the above requirement, involves rather complex management of the television camera.

In order to simplify this management, it is possible to integrate the contributions of the $N_q$ light pulses necessary to cover with slices the whole space concerned up to the distance D in the television camera, in a standard time frame (1/25s - 1/30s).

This can be done by summing $N_q$ light pulses of a duration $\tau$ with $N_q$ openings of a duration $\tau$ with increasing delays until the maximum distance concerned is covered for each television frame; in this case, the total exposure (E) of the television camera for each television frame will be

$E = N \tau (= 5 \cdot 10^{-7}$ s).

Alternatively, with even simpler management, receiving windows with a duration $T = \frac{2D}{c}$ may be opened for each light pulse emitted.

Thus, the total exposure (E) of the television camera for each frame is

$$E = N_q \frac{2D}{c} = N_q \frac{2 \tau cN_q}{c} \quad (5 = 5 . 10^{-5} s)$$

It is considered that, apart from the contribution of any light sources other than the active one, this second hypothesis provides a signal/background ratio which is worse by a factor less than or equal to 2 than the previous one since the time for which the scattering space is illuminated is equal in both cases ($N_q . \tau$) and the accumulation of signals due to backscattering by the fog is $N_q \tau$ in one case and $2N_q^2 \tau$ in the other, whilst the contribution of the objects present in the scene remains constant but is summed only once in the first case and $N_q$ times in the second (the factor is less than or equal to 2 because the additional integration relates to the space between D and 2D). Therefore, in the two cases:

Case 1 - Background $= E = N_q \tau$

Signal $= 1$

$S/N = 1/N_q$

Case - Background $= N_q . \frac{2D}{c} = 2 N_q^2 \tau$

Signal $= N_q \tau$

$S/N = 1/2 N_q$.

In each case, however, it is possible to cancel out the contribution from the backscattering in the space in the immediate vicinity of the receiver where it is most intense (blind space).

The attenuation of signals due to propagation in the scattering medium (which may possibly be compensated for by an increase in the power emitted by the light source 4 so as to retain visibility by virtue of the better signal/interference ratio) will not be considered herein, but that resulting from the pulsed-light method will be considered.

It is clear that the pulsed method provides a signal which is inferior by a factor $1/N \tau$ to that with continuous light.

With reference to the typical values indicated above, the order of magnitude of this reduction is approximately $6 . 10^4$.

The signal recovery can take place with the use of intensifying television cameras in which the intensifier 10 acts both as such and as a rapid shutter.

Television cameras of this type are currently available commercially. For example, known antiblooming CID television cameras which are produced by General Electric and intensify with an optical gain of 5000 are capable of pulsed operation with rise times of the order of 5ns.

In order to minimise the interference generated by the environment, such as daylight or street lighting, it is possible to carry out optical filtering at the wavelength of the monochromatic light used for the active emission associated with a limited opening time of the television camera (e.g. $5.10^{-5}$ s of exposure per frame) or even to increase the power emitted by the lamp 4.

As regards interference caused by passing vehicles, if they are provided with the same device 2, 4 operating at the same wavelength, frequency of repetition, and duration of acquisition time-windows, the law of casual coincidence between non-synchronised devices applies. The number of coincidences, that is, the direct illumination of the sensor unit 2 in one vehicle by the lamp 4 of another vehicle, is $2NT = 2 . 1.5 . 10^3 . 10^6 =$

$3.10^{-3}$ for each vehicle passed.

This coincidence poses problems only of signal dynamics (which are easily resolved since they relate to pulses) whilst the probability of the passing vehicle being detected is increased and the performance of the system is therefore slightly improved.

## Claims

1. A method for detecting images of an object (3) in conditions of poor visibility, characterised in that it comprises the steps of:
- sending (4) a train of light pulses (5, 6) towards the object (3);
- observing (2) the object (3) illuminated by the pulses (5, 6) in respective time windows (10);
- reconstructing (12 to 14) images of the object (3) from the observations in the respective time windows (5, 6) and
- displaying (15) the images thus reconstructed.

2. A method according to Claim 1, characterised in that the pulses (5, 6) are monochromatic light pulses (4), preferably with a wavelength λ substantially equal to 900 nm.

3. A method according to Claim 1 or Claim 2, characterised in that the object (3) is observed in substantially monochromatic conditions.

4. A method according to Claim 2 and Claim 3, characterised in that the object (3) is observed by means of filtering at a wavelength which corresponds substantially to the wavelength of the monochromatic light (14) of the pulses (5, 6).

5. A method according to any one of Claims 1 to 4 characterised in that the duration of each observation time window is of the same order of magnitude as the duration of each light pulse (5, 6).

6. A method according to any one of Claims 1 to 4, characterised in that each observation time window has a duration equal to a plurality (Nq) of light pulses (5, 6).

7. A method according to Claim 1 or Claim 6, characterised in that each observation time window has a duration T with

$T = \frac{2D}{c}$

where c is the speed of light in the observation medium and D is the maximum permitted distance of the object.

8. A device for detecting images of an object (3) in conditions of poor visibility, particularly by the method according to Claim 1, characterised in that it comprises:
- illumination means (14) for sending a train of light pulses (5, 6) towards the object (3);
- televisual means (10 to 12) for observing the object (3) illuminated by the pulses and for generating corresponding television signals, the televisual means including a shutter (10) which is operable selectively (14, 16) so as to make the televisual means sensitive only in respective time windows,
- processor means (13) for reconstructing images of the object (3) from the television signals obtained, and
- display means (15) for presenting the reconstructed images.

9. A device according to Claim 8, characterised in that the illumination means (4) generate monochromatic light, preferably with a wavelength λ substantially equal to 900 nm.

10. A device according to Claim 8 or Claim 9, characterised in that the televisual means (10 to 12) have a substantially monochromatic sensitivity due to optical filtering.

11. A device according to Claim 9 and Claims 10, characterised in that the televisual means (10 to 12) have a monochromatic sensitivity which substantially corresponds to the monochromatic light generated by the illumination means (4).

12. A device according to any one of Claims 8 to 10, characterised in that the televisual means (10 to 12) include an image-intensifier element (10).

13. A device according to Claim 11, characterised in that the image-intensifier element (10) can be activated selectively so that the intensifier element (10) also acts as a shutter (10) for defining the observation time windows.

14. A device according to any one of Claims 8 to 13, characterised in that the display means comprise a head-up display unit (15).

15. A motor vehicle (1) provided with a device (2, 4) according to any one of Claims 8 to 14, for driving in conditions of poor visibility.

FIG. 1

FIG. 2